(19) Europäisches Patentamt
European Patent Office
Office européen des brevets

(11) **EP 3 333 277 B1**

(12) **EUROPEAN PATENT SPECIFICATION**

(45) Date of publication and mention
of the grant of the patent:
**24.04.2019 Bulletin 2019/17**

(21) Application number: **15790600.9**

(22) Date of filing: **05.08.2015**

(51) Int Cl.:
*F16J 1/01* (2006.01)   *C22C 38/02* (2006.01)
*C22C 38/04* (2006.01)   *C22C 38/22* (2006.01)
*C22C 38/28* (2006.01)   *C22C 38/34* (2006.01)
*C21D 9/00* (2006.01)   *C21D 9/02* (2006.01)
*C21D 1/18* (2006.01)   *F16J 9/26* (2006.01)

(86) International application number:
**PCT/ES2015/070612**

(87) International publication number:
**WO 2017/021565 (09.02.2017 Gazette 2017/06)**

(54) **HIGH-STRENGTH LOW-ALLOY STEEL WITH HIGH RESISTANCE TO HIGH-TEMPERATURE OXIDATION**

HOCHFESTER NIEDERLEGIERTER STAHL MIT HOHER BESTÄNDIGKEIT BEI HOCHTEMPERATUR-OXIDATION

ACIER FAIBLEMENT ALLIÉ À RÉSISTANCE ÉLEVÉE ET À RÉSISTANCE ÉLEVÉE À L'OXYDATION À CHAUD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.06.2018 Bulletin 2018/24**

(73) Proprietor: **Sidenor Investigación y Desarrollo, S.A.**
**48970 Elexalde-Basauri (Bizkaia) (ES)**

(72) Inventors:
• **ELVIRA EGUIZABAL, Roberto**
**48970 Elexalde-Basauri (Vizcaya) (ES)**
• **ALBARRÁN SANZ, Jacinto**
**48970 Elexalde-Basauri (Vizcaya) (ES)**
• **LARAUDOGOITIA ELORTEGUI, Juan, José**
**48970 Elexalde-Basauri (Vizcaya) (ES)**

(74) Representative: **Herrero & Asociados, S.L.**
**Cedaceros, 1**
**28014 Madrid (ES)**

(56) References cited:
EP-A1- 2 093 304    EP-A2- 2 617 855
DE-A1- 19 549 094    DE-A1-102012 108 051
JP-A- 2004 263 247    US-A- 5 136 992
US-A1- 2013 285 299

**Description**

## OBJECT OF THE INVENTION

The present invention relates to a high-strength alloy steel with a high resistance to high temperature oxidation, with a long fatigue life at high temperatures and to a method for obtaining pieces of said steel, which have application in the scope of the steel industry, allowing the use thereof for components which work at high temperatures in oxidizing atmospheres, said pieces being particularly suitable in the automotive industry, for example for the manufacturing of internal combustion engine pistons of commercial and industrial vehicles.

The invention allows an alloyed steel to be obtained from a chemical composition and by means of a metallurgical process with a high resistance to high temperature oxidation which has a high mechanical strength at the same time having a high fatigue life and strength in hot work, in addition to having an optimal hardenability.

## BACKGROUND OF THE INVENTION

Typically, the steels resistant to oxidation are the stainless steels with a chrome content greater than 12% by weight and variable quantities of other alloy elements. The operating principal thereof is based on the formation of an auto-regenerating chrome-oxide surface layer which prevents the progression of the oxidation inwards.

At high temperature, the addition of chrome is not sufficient to prevent the progression of the oxidation and is combined with the addition of silicon, the application being typical in valves for internal combustion engines. If the conditions are more demanding, alloys based on nickel, titanium or coatings or ceramic materials are used. Said application of stainless steels in valves is possible given that the pieces have much less weight than the pistons and the increase in price of material is manageable. Aside from the foregoing, the valves have fewer mechanical loads than the pistons in which the use of stainless steels is more problematic.

In mechanical components subjected to high temperature cyclic loads it is also demanded that they have good mechanical strength in the range of working temperatures and good fatigue strength. Furthermore, the pieces have to show a moderate impact resistance, suitable machinability, weldability and forgeability so that they can be processed by the current manufacturing facilities at a cost comparable to the conventional materials. These characteristics are determined to a large extent by the content of carbon of the steel which fluctuates between 0.30% and 0.50% by weight as well as the content of other alloy elements such as for example Si, Mn, Cr, Ni, Mo and V, the object of which is to increase the hardenability of the steel and ensure that the microstructure of the hardened piece is martensite in the entire section thereof and/or reaches the strength desired by other alternative ways of hardening.

There are numerous typified steels such as those in international norms with tensile strength at room temperature which fluctuates between 800 MPa and 1200 MPa. These values, however, notably depend on the thickness of the piece and the highest values are obtained in the components with small thickness. The mechanical strength is lower, the greater the temperature at which the piece works and similarly the fatigue strength of the steel.

For pieces in contact with high-temperature fluids, a good hot mechanical strength and good resistance to high-temperature oxidation are fundamental for avoiding the deterioration of the piece and guaranteeing an appropriate service life. In applications with requirements of mechanical strength and moderate demand of resistance to oxidation, the more common qualities are the steels with hardening and tempering heat treatment such as 42CrMo4 or steels for direct use, with a ferritic pearlitic structure such as 38MnSiV5 or bainitic structure. However, the hot strength of these steels notably depends on the tempering temperature thereof, in one case, or on the formation temperature of the corresponding microstructure in another which limits the maximum temperature at which said steels can work.

In addition to the those cited, at present there are steels and methods for obtaining the same aimed at improving the resistance to hot oxidation and hot strength, principally ferritic and austenitic stainless steels, normally with high contents of Cr, in which variable quantities of other alloy elements are normally added such as for example Si, Mn, Ni, Mo, Cu, V, Ti, Al, Nb, W, Sn, N, Zr, Ce, Co or B, some examples of which will be mentioned below.

The European patent application EP-2617855-A describes a steel with medium carbon and low alloy with high resistance to hot oxidation which by means of the alloy of silicon, titanium and boron obtains a mechanical strength greater than 950 MPa and prevents the formation of scale above 600° C.

In addition, the international application no. WO-01/86009-A describes a steel for valves with low-medium carbon, with high contents of Cr, Ni and Mn, with high mechanical strength and resistance to oxidation at temperatures between 800° C and 900° C.

Similarly, the European patent application no. EP-2749663-A describes a steel for valves with medium carbon, with high contents of Cr, Ni, Mn, Mo and Nb and which achieves high mechanical and fatigue strength and resistance to oxidation at 800° C.

The patent US 5753179 for steel exhaust valves also applies the addition of high contents of Cr, Ni, Mn, Mo, W, Nb and Ti to achieve high strength at high temperature and resistance to hot oxidation.

Other inventions for steels with high strength and resistance to hot oxidation are orientated towards stainless ferritic and austenitic steels with low carbon content such as those referred to below as an example.

The international application no. WO-2014/008881-A1 describes a stainless austenitic steel with the addition of more than 20% of Cr and Ni and significant contents of Mo, Nb and N with resistance to oxidation and to deformation by creep up to 750° C.

The international application no. WO-2014/036091-A1 relates to the invention of a stainless ferritic steel, with the addition of more than 15% of Cr and significant contents of Cu, Nb, Si and Ti, with good resistance to oxidation, strength at high temperature and good formability.

The international application no. WO-2010/009700-A1 resolves the problem of the resistance to creep and to corrosion at high temperature by means of the precipitation of an intermetallic (Ni, Co)Al-B2 coherent with the ferritic matrix.

The patent EP 0593776-B1 improves the resistance to saline corrosion at high temperature by means of a ferritic alloyed steel with more than 13% Cr and significant contents of Nb, Ti, Mo and W.

Similarly, the patent application EP 2677055-A1 describes the invention of a ferritic stainless steel with excellent resistance to oxidation and mechanical strength at high temperature.

The improvement to the resistance to oxidation at high temperature is achieved in other inventions by the addition of chrome contents greater than 8% in combination with other alloy elements in high quantities, in general, with low carbon contents and also with low mechanical strengths.

In the applications in which certain mechanical strength is required such as in inlet and exhaust valves, the carbon content by weight fluctuates between 0.30% and 0.65%, also maintaining high contents of alloy elements, principally Cr, Ni and Mn.

The use of these inventions in the massive manufacture of mechanical components for internal combustion engines of cars and industrial vehicles is limited by the high cost of the alloys, the difficulties of manufacturing these in an economic manner and/or the low mechanical properties. This challenge has not yet been resolved completely by the prior art.

Therefore, the properties and cost of the pieces subjected to mechanical loads and to oxidation at high temperature, manufactured with steels intended for said applications, are capable of being optimized.

## DESCRIPTION OF THE INVENTION

The present invention relates to a low-alloy steel and to a method for obtaining pieces of said steel, in which as a result of diverse research, a high resistance to oxidation and mechanical strength at high temperature and good mechanical properties at room temperature have been achieved with tensile strength values between 800 MPa and 1100 MPa and a moderate toughness with values greater than 25 J. A low-alloy steel is understood as that in which no alloy element is present in a quantity greater than 5% by weight with respect to the total of components present in the alloy.

The invention allows a steel to be obtained which, by means of heat treatment or directly from rolling or forging heat, from a novel chemical composition and a determined metallurgical process, has a high resistance to oxidation at temperatures between 500° C and 650° C at the same time as having good mechanical strength in this same range of temperatures, at the same time having good resistance and toughness at room temperature and high hardenability, which is important, for example for the complete transformation of austenite to martensite in pieces with large thickness.

Furthermore, in addition to the chemical composition, the hot forming and the heat treatment processes carried out on the steel influence the mechanical characteristics of the final component significantly. One block of steel is heated at a temperature lower than 1,250° C and deforms by forging methods to the desired form. Later it is controlled cooled, either to facilitate the machining thereof or to achieve the final mechanical properties. In order to obtain an optimal resistance to oxidation and mechanical properties, the piece with the initial chemical composition is subjected to a determined hardening and tempering process which must be carried out in specific time-temperature conditions.

To guarantee a high fatigue life at high temperature, it is necessary to apply, in the manufacturing process of this steel, a specific process of deoxidation and flotation of inclusions in special determined conditions. At the same time, the hardening and tempering heat treatment conditions are fundamental for ensuring a high stability of the martensitic structure at high temperature and good fatigue strength of between 400° C and 600° C.

A synergetic effect between a novel combination of chemical elements and a method for obtaining said steel has been proven, which envisages a specific heat treatment, achieving a low-alloy steel with high resistance to hot oxidation, high strength and high fatigue strength at high temperature, in addition to good suitability to hot forming and good hardenability, high strength and toughness at room temperature.

The research carried out has provided as a result a new quality of silicon alloyed steel, which comprises the following chemical composition in percentage by weight:

$$0.33\% \le C \le 0.47\%$$

1.75% ≤ Si ≤ 3.00%
0.65% ≤ Mn ≤ 1.65%
0.15% ≤ Cr ≤ 1.50%
0.01% ≤ Mo ≤ 0.35%
0.01% ≤ V ≤ 0.30%
0.001% ≤ Nb ≤ 0.100%
the rest of the elements being iron as well as impurities resulting from obtaining the steel.

These alloy elements are used in alloyed steels to improve the tensile strength, the tempering resistance, the toughness or other characteristics, but not with the concentrations by weight indicated, with the combination of elements which is proposed, nor for obtaining the properties previously described which allow the use thereof in the mentioned applications.

Each one of the alloy elements, in the previously indicated proportions, influences the steel ultimately obtained in determined parameters and properties.

Carbon is an indispensable element for obtaining a high strength and hardness following the hardening and tempering treatment. Below 0.33% of carbon, the strength obtained is insufficient. On the other hand, above 0.47%, the toughness of the steel notoriously decreases, especially in the presence of high silicon contents.

The silicon forms an oxide in combination with the iron which adheres to the surface of the steel and delays the oxidation process at high temperature. In order for said layer to significantly delay the hot oxidation, the minimum content must be fixed at 1.75%, it being more effective as the content of silicon of the steel increases. However, an excessive silicon content favors embrittlement mechanisms of the steel and causes the toughness to significantly reduce, especially in the intermediate manufacturing processes such that the upper limit is fixed at 3.00%, improving the toughness as the silicon content of the steel decreases. A dependence of the toughness with a silicon content has been found, which follows the expression: toughness (joules) = 60 - 14.5 * %Si, which complies with silicon percentages greater than 2%. In addition, the silicon notably modifies the critical temperatures of the steel, increases the austenite to ferrite transformation temperature and vice versa as well as reduces the melting and solidification temperatures of the steel, which affects the ranges in which said steel can be transformed by hot working. In addition, the silicon is a strong deoxidizer and increases the hardenability.

As has been indicated, both the percentage of silicon and, to a lesser extent, the percentage of chrome, modify the temperature at which the austenite transforms into ferrite. This means that the tempering temperature can be elevated, which results in the falling of mechanical properties appearing at a higher temperatures. At the current point of development of alternative internal combustion engines, these types of characteristics are fundamental since in relation to improving efficiency, both the pressure and the temperature in the engine tend to be elevated, thus the pistons have to be able to maintain their mechanical properties at high temperatures.

Manganese is an indispensable element for ensuring the hardenability required in a low-alloy steel. It can be used in combination with or as alternative to chrome to increase the hardenability of the steel and favor obtaining martensitic structures by means of hardening. At the same time, it prevents the pernicious effect of sulfur, being combined therewith to form MnS which favors the machinability and preparation for use of steel by metal cutting processes. On the other hand, an excessive content can favor the emergence of hardening cracks such that the optimal content is between 0.65% and 1.65%.

Chrome is an indispensable element for ensuring the hardenability required in hardened and tempered steels. Below 0.75%, the hardenability may not be sufficient and undesired structures can emerge in the nucleus of the piece, such that it can be complemented with the addition of manganese. A high content of chrome increases the risk of hardening cracks. Thus the upper limit is fixed at 1.50%. At the same time, chrome is the essential element for improving the resistance to corrosion of steels. Chrome has a synergetic effect with silicon for improving the resistance to oxidation at high temperature and said improvement increases progressively with greater contents of chrome.

Molybdenum has a strong effect favoring hardenability, in turn being a robust former of carbides which provide a notable secondary hardening effect during the tempering. In addition, molybdenum improves the resistance to pitting corrosion and prevents tempering embrittlement avoiding phosphorous precipitation in grain boundaries. However, in high contents, the cost of alloying is excessive and not economically manageable such that the preferable range is between 0.01% and 0.35%.

Vanadium is a micro-alloying element which contributes to refining the grain size and causes an intense hardening by precipitation and when it remains in solid solution it increases the hardenability significantly. In the presence of high silicon contents, as the critical points emerge at much higher temperatures, the precipitation of carbides and vanadium nitrides is produced in the intercritical zone, multiplying the hardening by precipitation of the steel. The vanadium precipitates are nucleators of hydrogen such that in corrosive environments, they fix and improve the delayed resistance to fracture induced by hydrogen. However, with very high contents of vanadium, the precipitants coalesce and the effect thereof can again be pernicious. Therefore, the optimal content of vanadium is between 0.01% and 0.30%.

Niobium is a micro-alloying element with effects similar to aluminum in controlling the grain size and to vanadium in hardening the steel by precipitation, such that while maintaining a fine austenitic grain size, it contributes to increase the mechanical strength and to improve the toughness. In high silicon steels it is preferable over titanium for controlling the grain size at high temperature, given the tendency of the titanium nitrides to coalesce in the residual liquid. In addition, the precipitates of niobium fix the hydrogen which attacks the steels in corrosive environments, improving the resistance to delayed fracture. Niobium contributes to improving the resistance to oxidation together with chrome, silicon, molybdenum and titanium according to the expression of equivalent chrome:

$$\% \text{ Cr equivalent} = \% \text{ Cr} + \text{Mo} + 1.5 * \text{Si} + 0.5 * (\text{Ti} + \text{Nb})$$

If the sum of Cr+Si is greater than 12%, it is considered that it is a stainless steel, in the case of the invention said sum never passes 4.5%.

Above 0.100%, however, a thickening of the precipitates is produced which is detrimental to the mechanical properties. The optimal content of niobium is fixed between 0.001 % and 0.100%.

In addition, the steel which the invention proposes can also comprise at least one of the following elements or a combination of these, with a percentage by weight:

$P \leq 0.030\%$
$S \leq 0.040\%$
$Cu \leq 0.50\%$
$0.001 \% \leq Al \leq 0.050\%$
$Ti \leq 0.015\%$
$0.003\% \leq N \leq 0.020\%$

the rest being residual elements resulting from obtaining the steel.

Phosphorous hardens steel and segregates at the grain boundaries of austenite, drastically reducing the toughness of the steel. In addition, it favors hydrogen embrittlement and delayed fracture. In order to limit the adverse effect thereof, the phosphorous content is limited to less than 0.030%.

Sulfur, in combination with manganese, forms inclusions of manganese sulfide which facilitate the machining of the pieces by fragilization of the chip, breaking it and preventing tangling up the piece and damaging the surface. At the same time, it reduces the cutting forces and reduces the residual stresses on the piece. The greater the sulfur content, the better the behavior is in the machining process. In addition, manganese sulfides deform longitudinally in the direction of forging or rolling and considerably deteriorate the transversal mechanical properties and the fatigue behavior which is worse when the sulfur content is greater. Thus, the sulfur content is restricted to less than 0.040%.

The addition of copper prevents the decarburization of the steel and improves the resistance to corrosion in a manner similar to nickel, inhibiting the growth of corrosion pitting. However, a high copper content worsens the hot ductility of the steel such that the upper limit of copper is fixed at 0.50%.

Aluminum is an element which acts as a strong deoxidizer during the manufacturing process of steel. Aluminum forms aluminum nitrides which contribute to control the austenitic grain size during the heat treatments and the heating prior to the hot forming processes. Alternatively, it can be used in combination with or substituting niobium as the controller of the grain size. However, it forms oxides with high hardness which are very detrimental for the fatigue life such that the upper limit thereof is established at less than 0.050%.

Titanium is normally an effective controller of the austenitic grain size at high temperature, typically at hot forging temperature (1,250° C) since, given the affinity thereof for nitrogen, it forms titanium nitrides at temperatures below and/or close to those of liquid steel which prevents the growth of the austenitic grain. However, in steels with high silicon, the melting and solidification temperatures reduce such that the titanium nitrides form completely in a liquid medium, coarsening and becoming ineffective for controlling the grain size and very detrimental on fatigue as stress nucleators. In order to avoid the formation and excessive coarsening of titanium nitrides, the titanium content of the steel is limited to a maximum of 0.015%, lower values being preferable.

Nitrogen is combined with Ti, B, Nb, Al and V to form nitrides, the precipitation temperatures of which depend on the respective content of the different elements and characteristic constants. With a suitable size, these nitrides exercise a pinning effect on the austenitic grain controlling the size thereof at high temperature and preventing the coalescence and growth thereof. However, if the nitrogen content or the content of the micro-alloying elements is very high, the precipitation is produced at high temperature and the precipitates grow, becoming ineffective for controlling the grain and detrimental for the fatigue life. Thus the nitrogen content in the steel is limited at 0.004% to 0.020%.

In other inventions, boron is also added to improve the hardenability. The common metallurgical practice is to add boron in the presence of titanium to prevent the formation of boron nitrides which precipitate at high temperature.

In steels with moderate or high silicon, as in the present invention, the addition of titanium is completely inappropriate given that they precipitate and coalesce in liquid and therefore the addition of boron, which is also not convenient as it can form boron nitrides at temperatures close to those of solidification which reduce the hardenability of the steel.

In order to achieve the benefits of resistance to oxidation at high temperature, high hot strength and fatigue strength and good toughness at room temperature, other inventions require a very high content of alloy elements or in another case, do not completely meet the mechanical properties required and mentioned previously, due to the fact that the degree of inclusionary cleanness was low and/or the balance of alloying and micro-alloying elements unsuitable with respect to the optimized process which the steel of the invention presents.

A preferred composition of the steel which the invention proposes comprises, in percentage by weight:

$0.37\% \le C \le 0.43\%$
$2.00\% \le Si \le 2.75\%$
$0.75\% \le Mn \le 1.50\%$
$0.15\% \le Cr \le 1.25\%$
$0.01\% \le Mo \le 0.30\%$
$0.01\% \le V \le 0.30\%$
$0.001\% \le Nb \le 0.060\%$

For this preferred composition, additionally, the steel can comprise at least one of the following elements, or a combination of these, by weight:

$P \le 0.030\%$
$S \le 0.040\%$
$Cu \le 0.50\%$
$0.001\% \le Al \le 0.050\%$
$Ti \le 0.010\%$
$0.003\% \le N \le 0.020\%$

A preferred composition of the steel which the invention proposes comprises, in percentage by weight:

$0.37\% \le C \le 0.43\%$
$2.25\% \le Si \le 2.50\%$
$0.75\% \le Mn \le 1.50\%$
$0.15\% \le Cr \le 1.25\%$
$0.01\% \le Mo \le 0.30\%$
$0.01\% \le V \le 0.30\%$
$0.001\% \le Nb \le 0.060\%$

For this preferred composition, additionally, the steel can comprise at least one of the following elements, or a combination of these, by weight:

$P \le 0.030\%$
$S \le 0.040\%$
$Cu \le 0.50\%$
$0.001\% \le Al \le 0.050\%$
$Ti \le 0.010\%$
$0,003\% \le N \le 0,020\%$

Thus after various experiments, a rigorous method has been developed for obtaining the steel following the following steps:

- Rigorously controlling the raw materials at the electric arc furnace, that is to say, coke and lime and especially scrap.
- Using between 30% and 70% of scrap of maximum quality with very low content of tramp elements.
- Carrying out an oxidizing period in an electric arc furnace, which is important for the dephosphorization of the steel, prior to foaming slag.
- Once the foaming slag has finished, proceeding to deslagging until the furnace is left with practically no slag, the object being a phosphorous presence in this stage or step, lower than 0.010% by weight.
- Tapping with standard temperature and parts per million (ppm) of oxygen, according to standard clean steels, ensuring that slag from the furnace does not pass to the ladle.

- Deoxidizing with Si to obtain a very fluid white slag with lime-spar base.
- Rigorously controlling the primary refining materials, that is to say, ferroalloys and other additional metallic materials and slaggers to ensure a residual content of titanium as low as possible (<0.005% Ti).
- Carrying out an extended vacuum, considering the vacuum time that which is lower 1 mbar.
- Finalizing the vacuum treatment with a temperature sufficient so as to cause an inclusion flotation process after the same of at least fifteen minutes without carrying out additions or heating of any type.
- Finally, a meticulous casting process must be followed with special protection from the liquid steel flow.
- If the solidification process is in continuous casting form, the casting speed, secondary cooling and stirring conditions are adjusted to minimize the time spent in the solidification interval (range of temperatures between the melting and solidification temperatures) and obtaining a homogenous solidification microstructure.
- If the solidification process is in ingot form, the starting format is adjusted to the dimension which ensures a sufficient degree of reduction by forging or rolling which completely closes the central cavity generated by the contraction of the steel upon solidifying.

This entire manufacturing method of the steel allows low levels of residuals (Cu, Sn, As and Sb) and phosphorus, less than 0.030% by weight to be achieved, in addition to a low inclusionary level.

The continuous cooling transformation (CCT) diagrams allow the heat treatments for a determined chemical composition to be represented when the phase transformations are produced in unbalanced conditions.

After various experimental tests, it has been recorded that following the manufacturing process of the steel which the invention proposes, with the above indicated chemical composition, by adjusting the cooling speeds from the rolling or forging heat or the holding temperatures and times for hardening and tempering, a steel with a tensile strength above 850 MPa and a high ductility is achieved with reduction of area >50% and a high resistance to oxidation at temperatures between 500° C and 600° C. In addition, said steel has a high hardenability, suitable for obtaining 100% martensite in thick sections such as those which the pistons of industrial vehicle engines have.

In order to obtain a piece of steel previously obtained with the cited characteristics, the invention envisages the carrying out of a method by way of which said piece of steel is obtainable.

The method for obtaining pieces of said steel comprises a hot forming process with a prior heating to a temperature greater than 1,100° C and lower than 1,250° C which allows the steel to be provided with a sufficient hot ductility to confer on the steel piece a form similar to that of the final component. Following the implementation of the form, the piece is left to cool in the air or in the furnace to obtain the desired hardness.

The piece is then machined into the final form thereof, being able to be subjected to a welding process to adopt complex forms. If required, a homogenization heat treatment can be carried out with controlled cooling in order to obtain the desired mechanical characteristics.

Subsequently, the method envisages possibly a hardening process - it is possible to opt to not harden and cool in a controlled manner from the forging/rolling, in this way the mechanical properties are lower, but there is a saving of process - which is carried out with an austenitization at a temperature between 920° C and 1,000° C, as a function of the size of the piece to be hardened, and a subsequent cooling in a liquid at a temperature between 40° C and 80° C such as for example, oil.

The method then comprises a tempering process which is carried out at a temperature greater than 600° C and lower than 750° C over at least one hour, as a function of the size of the piece to be treated, depending on the dimensions of the piece, being able to in this way adjust the hardness and toughness of the material, in addition to establishing the maximum operating temperature range which must always be 50° C to 100° C lower than the tempering temperature.

Additionally a superficial coating can be applied to improve the behavior in relation to the corrosion of the component.

Therefore, the method for obtaining steel pieces comprises the following steps:

- Obtaining the steel of the invention, previously described, in which the steel selected comprises the general composition or one of the previously defined preferred compositions.
- Manufacturing a piece of said steel for example by means of forging or another forming process.
- Cooling in a controlled manner the piece to obtain the final or intermediate desired mechanical characteristics.
- Machining the piece to the final dimensions.
- Welding the piece, as the case may be, to obtain complex forms.
- Carrying out, as the case may be, the previously defined hardening treatment on the piece.
- Carrying out, as the case may be, the previously defined tempering treatment on the piece.
- Coating, as the case may be, the piece with an anti-corrosion treatment.

## DESCRIPTION OF THE DRAWINGS

In order to complement the description and with the aim of aiding a better understanding of the characteristics of the invention, according to a practical preferred exemplary embodiment of the same, a set of drawings are attached as an integral part of said description, in which in an illustrative and non-limiting manner, the following is depicted:

Figure 1 shows a diagram of tempering curves obtained for each one of the steels A-D.
Figure 2 shows a microscopy in which the constituents of the scale layer and of the superficial layer of the steel D can be observed.

## EXEMPLARY EMBODIMENTS OF THE INVENTION

Example 1

By way of example, the tests carried out with steel samples with compositions close to the chemical composition of the steel of the invention are described below. Table 1 shows the chemical compositions in percentage by weight, the rest being Fe and impurities:

Table 1

|   | C | Mn | Si | P | S | Cr | Ni | Mo | V | Nb | N |
|---|---|----|----|---|---|----|----|----|---|----|---|
| A | .40 | .72 | .27 | .007 | .014 | 1.08 | .15 | .19 | .001 | .002 | .0131 |
| B | .43 | .75 | 2.30 | .006 | .013 | 1.04 | .15 | .19 | .008 | .002 | .0085 |
| C | .46 | .81 | 3.09 | .008 | .016 | 1.06 | .15 | .20 | .004 | .032 | .0064 |
| D | .45 | .76 | 4.07 | .006 | .014 | 1.04 | .14 | .20 | .003 | .002 | .0083 |

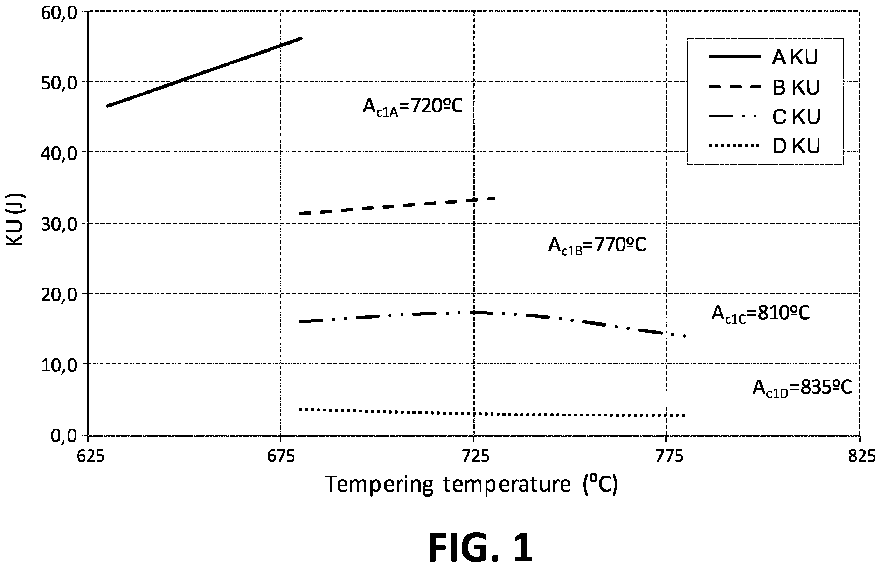

Figure 1 shows the diagram of tempering curves obtained for each one of the steels A-D. For growing contents of silicon in the composition of the steel, although there is a progressive increase of the strength, a notable drop in the toughness is observed, which is practically independent of the tempering treatment applied. For each variant, the range of tempering temperatures is different, being greater the higher the content of silicon.

The temperatures indicated for Ac1 are those of the ferritic austenite change. The maximum temperature at which the tempering can be carried out, must be as a minimum 30° C below the temperature corresponding to Ac1. As the silicon increases, said possible temperature increases for tempering but the toughness is reduced, represented in the vertical axis. The percentage of silicon increases from the line A to the line D.

All these steels have been subjected to hardening and tempering treatments at different temperatures with the aim of achieving the optimum toughness for each one of them. In controlled cooling conditions, the microstructure obtained is not tempered martensite as in these cases, but a combination of ferrite, pearlite and/or bainite with lower toughness. In order to ensure a minimum toughness of the steel in applications without service or process requirements of toughness, the silicon content must always be lower than 3%. In order to guarantee a minimum toughness of 20 joules in hardened and tempered state, the silicon content must be limited to maximum 2.75%. In order to achieve a sufficient toughness during the intermediate processes of transformation or in controlled cooling from the rolling or forging heat, the steel must have a silicon content of 2.50% as a maximum.

In addition, after maintaining samples of different variants in oxidizing atmospheres at high temperature for a prolonged period of time, the morphology and chemical composition of the oxide layer generated on the surface varied depending on the silicon content of the sample and the microstructure thereof.

The resistance to oxidation at high temperature of all the analyzed steels A-D is greater when they have a homogenous microstructure of tempered martensite with respect to a heterogeneous microstructure of ferrite, pearlite and/or bainite. At the same time, the resistance to oxidation is greater when the martensite has been tempered at greater temperature.

Above 2% Si, a layer of tens of microns enriched with silicon and chrome is formed on the surface of the steel. With greater silicon content in the steel, the enrichment in the superficial layer is greater and the greater the protection against hot oxidation.

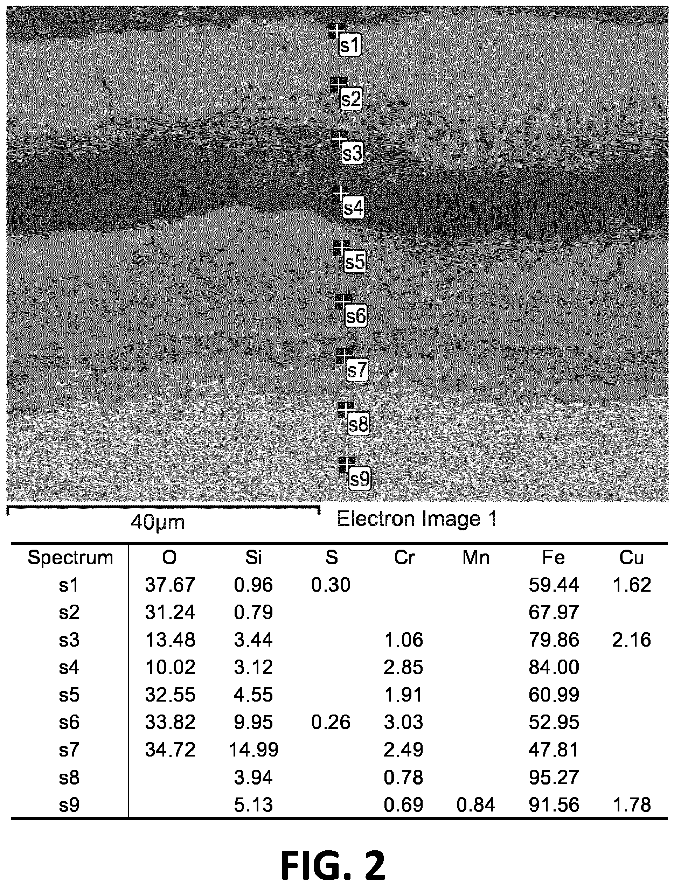

In figure 2, the constituents of the scale layer and of the superficial layer of the steel D of the example are observed. The layer adjacent to the surface of the steel is enriched with silicon and chrome up to three to four times the content of these elements in the steel and acts as a barrier to hot oxidation at least up to the range immediately below the tempering temperatures of the steel or formation of the microscopic constituents thereof during the cooling process from forging or rolling.

The micrograph of figure 2 represents a cut in the material, in the zone closest to the exterior (s1) to the zone closest to the interior (s9). There the different percentages of the elements due to the oxidation are seen. In s6 and s7 is where there is a greater percentage of Si, which acts as a protecting barrier so that the oxidation does not advance towards the interior of the piece. If in this zone, the percentage of Si is lower, the barrier is not as effective in stopping the advance of the oxidation.

The invention has been described according to some preferred exemplary embodiments of the same, but for the person skilled in the art it is evident that multiple variations can be introduced into said preferred embodiments without exceeding the object of the claimed invention.

**Claims**

1. A high-strength low-alloy steel with high resistance to hot oxidation, **characterized in that** it consisting of the following elements with percentage by weight:

    $0.33\% \leq C \leq 0.47\%$
    $1.75\% \leq Si \leq 3.00\%$
    $0.65\% \leq Mn \leq 1.65\%$
    $0.15\% \leq Cr \leq 1.50\%$
    $0.01\% \leq Mo \leq 0.35\%$
    $0.01\% \leq V \leq 0.30\%$
    $0.001\% \leq Nb \leq 0.100\%,$

    and optionally at least one of the following elements with percentage by weight:

    $P \leq 0.030\%$
    $S \leq 0.040\%$
    $Cu \leq 0.50\%$
    $0.001\% \leq Al \leq 0.050\%$
    $Ti \leq 0.015\%$
    $0.003\% \leq N \leq 0.020\%.$

    the rest being iron and impurities
    wherein $Cr+Si \leq 4.5\%$ and % Cr equivalent= %Cr+Mo+1.5xSi+0.5x (Ti+Nb).

2. The low-alloy steel according to claim 1, wherein the following elements present the following percentage by weight:

    $0.37\% \leq C \leq 0.43\%$
    $2.00\% \leq Si \leq 2.75\%$
    $0.75\% \leq Mn \leq 1.50\%$
    $0.15\% \leq Cr \leq 1.25\%$
    $0.01\% \leq Mo \leq 0.30\%$
    $0.01\% \leq V \leq 0.30\%$
    $0.001\% \leq Nb \leq 0.060\%.$

3. The low-alloy steel according to any one of claims 1 and 2, wherein the following elements present the following percentage by weight:

    $P \leq 0.030\%$
    $S \leq 0.040\%$
    $Cu \leq 0.50\%$
    $0.001\% \leq Al \leq 0.050\%$
    $Ti \leq 0.010\%$
    $0.003\% \leq N \leq 0.020\%.$

4. The low-alloy steel according to any one of claims 1 to 3 , wherein the Si is in a range between
    $2.25\% \leq Si \leq 2.50\%$

**Patentansprüche**

1. Hochfester, niedriglegierter Stahl mit hoher Beständigkeit gegen Heißoxidation, **dadurch gekennzeichnet, dass** er aus den folgenden Elementen mit Gewichtsprozenten besteht:

$0.33\% \leq C \leq 0.47\%$
$1.75\% \leq Si \leq 3.00\%$
$0.65\% \leq Mn \leq 1.65\%$
$0.15\% \leq Cr \leq 1.50\%$
$0.01\% \leq Mo \leq 0.35\%$
$0.01\% \leq V \leq 0.30\%$
$0.001\% \leq Nb \leq 0.100\%$,

und optional mindestens einem der folgenden Elemente mit Gewichtsprozenten besteht:

$P \leq 0.030\%$
$S \leq 0.040\%$
$Cu \leq 0.50\%$
$0.001\% \leq Al \leq 0.050\%$
$Ti \leq 0.015\%$
$0.003\% \leq N \leq 0.020\%$.

wobei der Rest Eisen und Verunreinigungen ist,
wobei $Cr+Si \leq 4.5\%$ und %Cr äquivalent= %Cr+Mo+1.5xSi+0.5x (Ti+Nb) ist.

2. Hochfester, niedriglegierter Stahl gemäß Anspruch 1, wobei die folgenden Elemente den folgenden Gewichtsprozentsatz aufweisen:

$0.37\% \leq C \leq 0.43\%$
$2.00\% \leq Si \leq 2.75\%$
$0.75\% \leq Mn \leq 1.50\%$
$0.15\% \leq Cr \leq 1.25\%$
$0.01\% \leq Mo \leq 0.30\%$
$0.01\% \leq V \leq 0.30\%$
$0.001\% \leq Nb \leq 0.060\%$.

3. Hochfester, niedriglegierter Stahl gemäß einem der Ansprüche 1 und 2, wobei die folgenden Elemente den folgenden Gewichtsprozentsatz aufweisen:

$P \leq 0.030\%$
$S \leq 0.040\%$
$Cu \leq 0.50\%$
$0.001\% \leq Al \leq 0.050\%$
$Ti \leq 0.010\%$
$0.003\% \leq N \leq 0.020\%$.

4. Hochfester, niedriglegierter Stahl gemäß einem der Ansprüche 1 bis 3, wobei das Si in einem Bereich zwischen $2.25\% \leq Si \leq 2.50\%$ liegt.

**Revendications**

1. Un acier faiblement allié à haute résistance possédant une résistance élevée à l'oxydation à chaud, **caractérisé en ce qu'**il consiste en les éléments suivants en pourcentage en poids :

$0,33\% \leq C \leq 0,47\%$
$1,75\% \leq Si \leq 3,00\%$
$0,65\% \leq Mn \leq 1,65\%$

0,15 % ≤ Cr ≤ 1,50 %
0,01 % ≤ Mo ≤ 0,35 %
0,01 % ≤ V ≤ 0,30 %
0,001 % ≤ Nb ≤ 0,100 %,

et facultativement au moins l'un des éléments suivants en pourcentage en poids :

P ≤ 0,030 %
S ≤ 0,040 %
Cu ≤ 0,50 %
0,001 % ≤ Al ≤ 0,050 %
Ti ≤ 0,015 %
0,003 % ≤ N ≤ 0,020 %

le reste étant du fer et des impuretés
dans lequel Cr + Si ≤ 4,5 % et % Cr équivalent = % Cr + Mo + 1,5 x Si + 0,5 x (Ti + Nb).

2. L'acier faiblement allié selon la revendication 1, dans lequel les éléments suivants présentent le pourcentage en poids suivant :

0,37 % ≤ C ≤ 0,43 %
2,00 % ≤ Si ≤ 2,75 %
0,75 % ≤ Mn ≤ 1,50 %
0,15 % ≤ Cr ≤ 1,25 %
0,01 % ≤ Mo ≤ 0,30 %
0,01 % ≤ V ≤ 0,30 %
0,001 % ≤ Nb ≤ 0,060 %.

3. L'acier faiblement allié selon l'une quelconque des revendications 1 et 2, dans lequel les éléments suivants présentent le pourcentage en poids suivant :

P ≤ 0,030 %
S ≤ 0,040 %
Cu ≤ 0,50 %
0,001 % ≤ Al ≤ 0,050 %
Ti ≤ 0,010 %
0,003 % ≤ N ≤ 0,020 %.

4. L'acier faiblement allié selon l'une quelconque des revendications 1 à 3, dans lequel le Si est dans une gamme comprise entre
2,25 % ≤ Si ≤ 2,50 %.

**FIG. 1**

EP 3 333 277 B1

| Spectrum | O | Si | S | Cr | Mn | Fe | Cu |
|----------|-------|-------|------|------|------|-------|------|
| s1 | 37.67 | 0.96 | 0.30 | | | 59.44 | 1.62 |
| s2 | 31.24 | 0.79 | | | | 67.97 | |
| s3 | 13.48 | 3.44 | | 1.06 | | 79.86 | 2.16 |
| s4 | 10.02 | 3.12 | | 2.85 | | 84.00 | |
| s5 | 32.55 | 4.55 | | 1.91 | | 60.99 | |
| s6 | 33.82 | 9.95 | 0.26 | 3.03 | | 52.95 | |
| s7 | 34.72 | 14.99 | | 2.49 | | 47.81 | |
| s8 | | 3.94 | | 0.78 | | 95.27 | |
| s9 | | 5.13 | | 0.69 | 0.84 | 91.56 | 1.78 |

# FIG. 2

**EP 3 333 277 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2617855 A
- WO 0186009 A
- EP 2749663 A
- US 5753179 A
- WO 2014008881 A1
- WO 2014036091 A1
- WO 2010009700 A1
- EP 0593776 B1
- EP 2677055 A1